# EUROPEAN PATENT APPLICATION

(11) **EP 4 752 591 A1**
(43) Date of publication of application: **03.06.2026**
(21) Application number: 25205263.4
(22) Date of filing: 29.09.2025
(51) Int. Cl.: G01S 7/03, G01S 7/35, G01S 13/931, H04B 10/2575, G01S 7/00

(54) **RADAR SYSTEMS AND METHODS OF OPERATING RADAR SYSTEMS**

(30) Priority: 29.11.2024 EP 24216596; 07.07.2025 EP 25187799
(71) Applicant: Xavveo GmbH, 13355 Berlin (DE)
(72) Inventor: MEISTER, Stefan, 12587 Berlin (DE); Höhn, Christoph, 13156 Berlin (DE); KEIL, Ulrich, 12249 Berlin (DE); OTTE, Sven, 16540 Hohen Neuendorf (DE)
(74) Representative: Fischer, Uwe

(57) **Abstract**

The present invention relates to radar systems, methods of operating radar systems, and vehicles equipped with such radar systems. Inter alia, the invention relates to a method of operating a radar system (1), for instance the radar system (1) of any of the preceding claims, that comprises a central unit (10), a radar transmission unit (20) and a radar reception unit (30), wherein the central unit (10) is optically connected to the radar transmission unit (20) via an optical forward path (50) and connected to the radar reception unit (30) via an optical backward path (60), characterized in that a radar driver signal (RDS) is transmitted as modulated optical radiation via a first optical fiber (51) of the optical forward path (50) to an optical receiver (40) that is electrically connected to the radar transmission unit (20) and the radar reception unit (30), unmodulated optical radiation is transmitted via a second optical fiber (52) of the optical forward path (50) to the radar reception unit (30), an electrical reception signal (AS) corresponding to the received radar radiation (RR) is mixed with the reference signal (RRS), the reference signal (RRS) being the radar driver signal (RDS) or a signal derived therefrom, to generate a baseband signal (BS), and unmodulated optical radiation is modulated with the baseband signal (BS) to generate optically modulated radiation for transmission via the optical backward path (60) to the central unit (10).

## Description

The present invention relates to radar systems, methods of operating radar systems, and vehicles equipped with such radar systems. The present application claims the benefit and priority to EP 25 187 799.9 filed on July 07, 2025 and EP 24 216 596.7 filed on November 29, 2024, the entire disclosure of which is hereby incorporated by reference herein.

### Background of the invention

German Patent DE 10 2017 221 257 A1 discloses a radar system comprising a central unit, a radar transmission unit, and a radar reception unit. The central unit is optically connected to the radar transmission unit via an optical forward path for transmitting a radar driver signal to the radar transmission unit. In response, the radar transmission unit generates radar radiation based on the radar driver signal. The radar reception unit processes received radar radiation to generate a radar baseband signal (here for instance in the form of IQ data), based on a reference signal. The central unit is optically connected to the radar reception unit via an optical backward path for receiving the radar baseband signal from the radar reception unit. In this known system, the baseband signal is modulated onto optical radiation that has already been modulated beforehand.

### Objective of the present invention

It is an objective of the present invention to provide a radar system with improved performance regarding the transmission of the radar baseband signal via the backward path. In particular, the invention aims to ensure that the radar baseband signal can be transmitted with high signal quality.

Another objective of the present invention is to provide a corresponding method of operating a radar system.

### Brief summary of the invention

An exemplary embodiment of the invention relates to a radar system comprising a central unit, a radar transmission unit, and a radar reception unit, wherein the central unit is optically connected to the radar transmission unit via an optical forward path for transmitting a radar driver signal to the radar transmission unit, wherein the radar transmission unit generates radar radiation based on the radar driver signal, wherein the radar reception unit processes received radar radiation to generate a baseband signal based on a reference signal, and wherein the central unit is optically connected to the radar reception unit via an optical backward path for optically receiving the radar baseband signal from the radar reception unit. The central unit transmits the radar driver signal as modulated optical radiation via a first optical fiber of the optical forward path to an optical receiver electrically connected to the radar transmission unit and the radar reception unit. The central unit further transmits unmodulated optical radiation via a second optical fiber of the optical forward path to the radar reception unit. The radar reception unit comprises a mixer for mixing an electrical reception signal corresponding to the received radar radiation with the reference signal, the reference signal being the radar driver signal or a signal derived therefrom, to generate the baseband signal. The radar reception unit comprises a modulator for modulating the received unmodulated optical radiation with the baseband signal to generate optically modulated radiation for transmission via the optical backward path to the central unit.

An advantage of the present invention is that the radar baseband signal - whether represented as IQ data or in any other form - is modulated only onto unmodulated optical radiation. This stands in clear contrast to the above cited prior art system. In the prior art system, a first fiber provides the radar transmission unit with a radar driver signal, while a second fiber provides the radar reception unit with the same radar driver signal for use as a reference signal when generating the radar baseband signal. The radar baseband signal is then modulated onto optical radiation that has already been modulated beforehand, which may reduce the quality of the baseband signal after reception at the central unit. According to the present invention, by contrast, the first fiber is used to transmit the radar driver signal that also serves as the radar reference signal to both the radar transmission unit and the radar reception unit, while the second fiber is dedicated to providing the radar reception unit with unmodulated optical radiation. The radar reception unit then modulates this unmodulated radiation with the radar baseband signal, thereby avoiding any degradation due to prior modulations. In other words, the invention ensures that the sensitive baseband signal is transmitted with high integrity, since it is modulated only onto unmodulated radiation.

Furthermore, this improvement does not require the use of an additional fiber. In particular, the first fiber simultaneously supplies both the radar transmission unit and the radar reception unit with the radar driver signal and the radar reference signal via a common optical receiver. As a result, the inventive concept enables reliable operation with only three optical fibers, namely for transmitting the radar driver signal, for supplying unmodulated radiation for modulation with the baseband signal, and for the backward path carrying the baseband signal to the central unit. This ensures a higher quality of the baseband signal and thus more reliable radar performance, while avoiding unnecessary hardware complexity. At the same time, the concept does not exclude embodiments making use of additional fibers for further purposes. Hence, the invention combines reduced system complexity and cost efficiency with improved signal quality and robustness, while maintaining flexibility for system embodiments with additional fibers.

The central unit is preferably configured to transmit a control signal for controlling the radar transmission unit also via the first optical fiber of the optical forward path. The optical receiver may extract the control signal and provide it to a control subunit of the radar transmission unit.

The optical forward path may also comprise a third fiber.

The central unit may be configured to transmit a control signal for controlling the radar transmission unit via a third optical fiber of the optical forward path to a second optical receiver. In the latter case, the second optical receiver may extract the control signal and provide it to a control subunit of the radar transmission unit. The control signal may for instance enable or disable the generation of radar radiation (i.e. active radar operation) and/or control the output power of the radar transmission unit.

Further, the input end of the first fiber and the input end of the third fiber may be connected to a first common fiber via a first splitter. In the latter case, the first common fiber may be connected to a first modulator of the central unit and may transmit both the radar driver signal and the control signal towards the splitter.

The radar system may comprise a plurality of radar modules each of which comprises an optical receiver, a radar transmission unit and a radar reception unit.

Further, the optical forward path may comprise a plurality of first fibers, each of which is connected to the optical receiver of an assigned radar module of said plurality of radar modules. The optical backward path may comprise a plurality of second fibers, each of which may be connected to the modulator of an assigned radar module of said plurality of radar modules.

The optical forward path may comprise a plurality of third fibers, each of which is connected to another optical receiver of an assigned radar module of said plurality of radar modules.

For each first fiber, the central unit may comprise an individual first laser for generating first unmodulated radiation and an individual first modulator for modulating the first unmodulated optical radiation with the radar driver signal. Each first fiber may be individually connected to one of said first modulators.

Further, the first fibers may be connected to a first common fiber via a first optical splitter.

The central unit may comprise a first laser for generating first unmodulated radiation and a first modulator for modulating the first unmodulated optical radiation with the radar driver signal. The first common fiber may be connected to the first modulator.

Furthermore, the first modulator may modulate the first unmodulated optical radiation with the radar driver signal and the control signal.

For each second fiber, the central unit may comprise an individual second laser for generating second unmodulated radiation. Each second fiber may be individually connected to one of said second lasers.

Also, the second fibers may be connected to a second common fiber via a second optical splitter. The second common fiber may be connected to the second laser.

The central unit may comprise a second laser for generating second unmodulated radiation.

For each third fiber, the central unit may comprise an individual third modulator for modulating the first or a third unmodulated optical radiation with the control signal. Each third fiber may be individually connected to one of said third modulators.

The first and/or second common fiber and/or the first and/or second optical splitter may be components of the forward path.

The central unit may comprise a central transmission module, central laser module, and/or a central reception module.

The first lasers are preferably located in the central transmission module and/or in the central laser module. The first modulators are preferably located in the central transmission module. The third modulators are preferably located in the central transmission module.

The central reception module may comprise an optical receiver that is connected to the radar reception unit via the backward path. The central reception module may comprise an amplifier that is connected to the optical receiver of the central reception module. The central reception module may comprise an analog-digital converter that is connected to the amplifier of the central reception module.

At least two of the components of the central transmission module, preferably all components of the central transmission module, are preferably integrated in a first EPIC (electro-photonic integrated circuit).

At least two of the components of the central reception module, preferably all components of the central reception module, are preferably integrated in a second EPIC (electro-photonic integrated circuit).

Alternatively, at least two of the components of the central transmission module and at least two of the components of the central reception module, preferably all components of said modules, are preferably integrated in the same EPIC.

The central transmission module may comprise a frequency generator.

The radar system preferably comprises two or more pluralities of radar modules, wherein an individual forward path and an individual backward path is assigned to each of said pluralities of radar modules, and wherein each of said pluralities of forward and backward paths corresponds to any of the forward and backward paths described above.

The radar system may be a FMCW- (Frequency Modulated Continuous Wave) radar system. The central unit may be configured to evaluate a frequency shift between emitted radar radiation and received radar radiation, in order to determine distances and/or speed.

Another exemplary embodiment of the present invention relates to a vehicle comprising a radar system as described above.

Another exemplary embodiment of the present invention relates to a method of operating a radar system (preferably the radar system as described above), that comprises a central unit, a radar transmission unit and a radar reception unit, wherein the central unit is optically connected to the radar transmission unit via an optical forward path and connected to the radar reception unit via an optical backward path, wherein a radar driver signal is transmitted as modulated optical radiation via a first optical fiber of the optical forward path to an optical receiver that is electrically connected to the radar transmission unit and the radar reception unit, wherein unmodulated optical radiation is transmitted via a second optical fiber of the optical forward path to the radar reception unit, wherein an electrical reception signal corresponding to the received radar radiation is mixed with the reference signal, the reference signal being the radar driver signal or a signal derived therefrom, to generate a baseband signal, and wherein unmodulated optical radiation is modulated with the baseband signal to generate optically modulated radiation for transmission via the optical backward path to the central unit.

### Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which
- Fig. 1-6: depict exemplary embodiments of radar systems according to the present invention,
- Fig. 7: depicts an exemplary embodiment of a radar driver signal that can be used in the radar systems of Figures 1-6,
- Fig. 8: depicts an exemplary embodiment of a vehicle equipped with a radar system according to any of the radar systems shown in Figures 1-6.

### Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

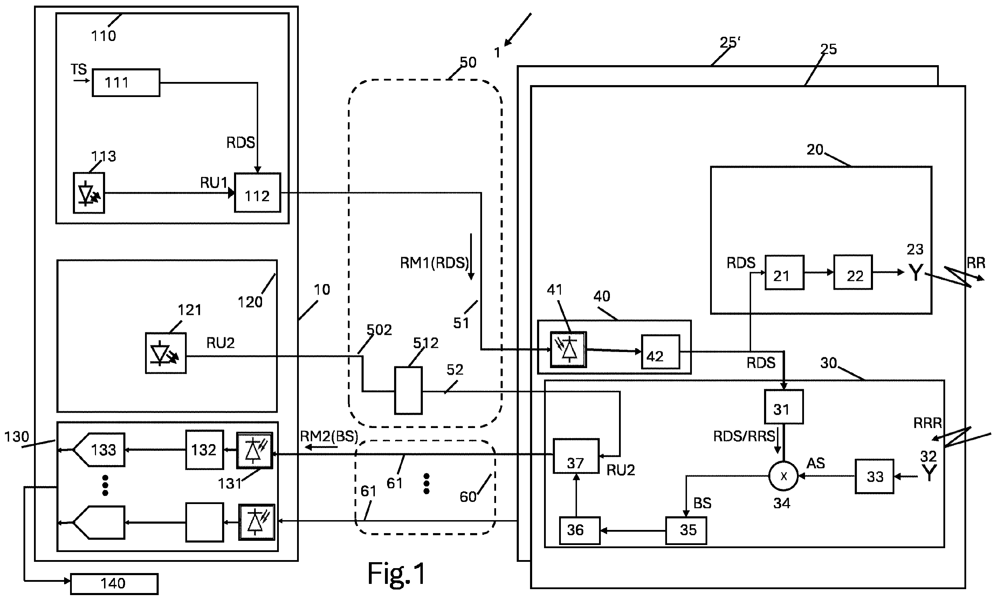

Figure 1 shows an exemplary embodiment of a radar system 1 according to the present invention. The radar system 1 comprises, inter alia, a central unit 10, a radar transmission unit 20, a radar reception unit 30 and an optical receiver 40. The radar system may be a FMCW-(Frequency Modulated Continuous Wave) radar system. The central unit may be configured to evaluate a frequency shift between emitted radar radiation and received radar radiation, in order to determine distances and/or speed.

The central unit 10 of Figure 1 comprises a frequency function generator 111, a first modulator 112 and a first radiation source (laser) 113. The frequency function generator 111, the first modulator 112 and the first radiation source 113 are arranged in a central laser transmission module 110 of the central unit 10. An electro-photonic integrated circuit (EPIC) may form the frequency function generator 111, the first modulator 112 and the first radiation source 113, or the entire central laser transmission module 110.

The central unit 10 further comprises a second radiation source (laser) 121, which is located in a central laser module 120 of the central unit 10. The second radiation source 121 generates unmodulated radiation RU2.

The central unit 10 also comprises a photodetector 131, an amplifier 132 and an analog-digital converter 133. These components are located in a central reception module 130 of the central unit 10. The amplifier 132 is preferably a transimpedance amplifier. Another EPIC may form the central reception module 130; alternatively, a single EPIC may form both the central laser transmission module 110 and the central laser module 120.

The radar transmission unit 20 of Figure 1 comprises a frequency multiplier 21, an amplifier 22 and a radar transmission antenna 23.

The radar reception unit 30 of Figure 1 comprises a frequency multiplier 31, a radar reception antenna 32, an amplifier 33, a mixer 34, a filter 35, a driver 36 and an electro-optical modulator 37.

The optical receiver 40 of Figure 1 comprises a photodetector 41 and an amplifier 42. The amplifier 42 is preferably a transimpedance amplifier.

The first modulator 112 is optically connected to the photodetector 41 of the optical receiver 40 via a first fiber 51 of an optical forward path 50.

The second radiation source 121 is connected to an input port of the electro-optical modulator 37 of the radar reception unit 30 via a second fiber 52 of the optical forward path 50. A fiber 61 of a backward path 60 optically connects an output port of the electro-optical modulator 37 to the photodetector 131 of the central reception module 130.

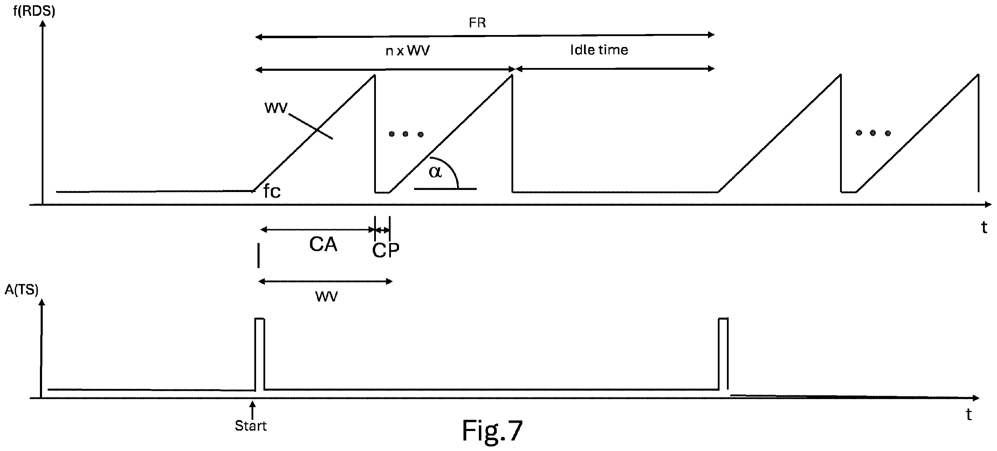

The radar system 1 of Figure 1 preferably operates as follows. The frequency function generator 111 generates an electrical radar driver signal RDS which is applied to the first modulator 112 and modulates unmodulated radiation RU1 generated by the first radiation source 113. For example, in response to each trigger event initiated by a trigger signal TS, the frequency function generator 111 may generate a frame FR (as illustrated in Figure 7) comprising a plurality of consecutive waveforms WV. The waveforms WV preferably comprise frequency ramp signals.

Figure 7 shows an exemplary embodiment of the frequency f of the radar driver signal RDS and the amplitude A of the trigger signal TS, both over time t. The amplitude A the radar driver signal RDS is preferably constant.

The frequency f of each waveform WV may continuously increase or decrease over time t, at least during an active segment CA of each waveform WV. fc designates the carrier frequency (e.g. the start frequency of each ramp) of the radar driver signal RDS, and α designates the slope of the frequency ramp.

In response to the radar driver signal RDS, the first radiation source 113 and the first modulator 112 provide modulated optical radiation RM1, which carries the radar driver signal RDS.

The first fiber 51 optically transmits the modulated radiation RM1 together with the radar driver signal RDS to the optical receiver 40, which extracts the radar driver signal RDS and provides it to the radar transmission unit 20. In response, the radar transmission unit 20 generates radar radiation RR, which is emitted by the radar transmission antenna 23.

Objects reflecting or backscattering the radar radiation RR cause returning radar radiation RRR, which is received by the radar reception antenna 32 of the radar reception unit 30.

The mixer 34 mixes a corresponding antenna signal AS, provided by the radar reception antenna 32 and the amplifier 33, with a radar reference signal RRS. The radar reference signal RRS is provided by the frequency multiplier 31 and may be a copy of the radar driver signal RDS or a signal derived therefrom, for example a time-delayed copy of the radar driver signal RDS.

The mixer 34 outputs a mixed signal, hereinafter referred to as a baseband signal BS. The baseband signal BS contains radar information, for example the distance and/or speed of objects that have reflected the emitted radar radiation RR.

The baseband signal BS may be directly provided to the electro-optical modulator 37, or it may be processed by the filter 35 and the driver 36 before modulating the unmodulated radiation RU2. The unmodulated radiation RU2 is provided by the second radiation source 121 of the central laser module 120 and is transmitted to the electro-optical modulator 37 via the second fiber 52 of the optical forward path 50.

The electro-optical modulator 37 modulates the unmodulated radiation RU2 with the baseband signal BS and generates modulated optical radiation RM2 that is output at the output port of the electro-optical modulator 37. The baseband signal BS is then optically transmitted to the photodetector 131 of the central reception module 130 via the fiber 61 of the backward path 60.

The photodetector 131 and the amplifier 132 of the central reception module 130 extract the baseband signal BS from the modulated radiation RM2, and the analog-digital converter 133 outputs the baseband signal BS after analog-digital conversion at an output port of the central reception module 130. The central unit 10 may comprise or be connected to an evaluation system 140 (e.g. a computer system), which evaluates the baseband signal BS in a manner known in the art. For example, the baseband signal BS may be subjected to a Fourier transform in order to generate radar data in the frequency domain that facilitate further evaluation to identify objects and their speed. The functionality of the evaluation system 140 may be implemented in computer software. The evaluation system 140 may further process the radar data in order to determine objects in the three-dimensional space (and their speed) and generate corresponding object data. The evaluation system 140 may also process the object data in order to determine driving control data. The driving control data preferably allow or support autonomous or semi-autonomous driving of a vehicle that is equipped with the radar system 1 of Figure 1.

The radar transmission unit 20 and the radar reception unit 30 are preferably arranged pairwise and may be components of the same radar transmission and reception module 25, as shown in an exemplary manner in Figure 1. The radar transmission and reception module 25 preferably also comprises the optical receiver 40.

Furthermore, the radar system 1 may comprise more than one pair of radar transmission units 20 and radar reception units 30, and/or more than one radar transmission and reception module, as indicated by reference numerals 25 and 25' in Figure 1.

In the latter case, the central unit 10 may comprise a first radiation source 113, a first modulator 112 and a first fiber 51 for each pair of radar transmission unit 20 and radar reception unit 30, and preferably also a second radiation source 121, a fiber 61, a photodetector 131, an amplifier 132 and an analog-digital converter 133 for each such pair.

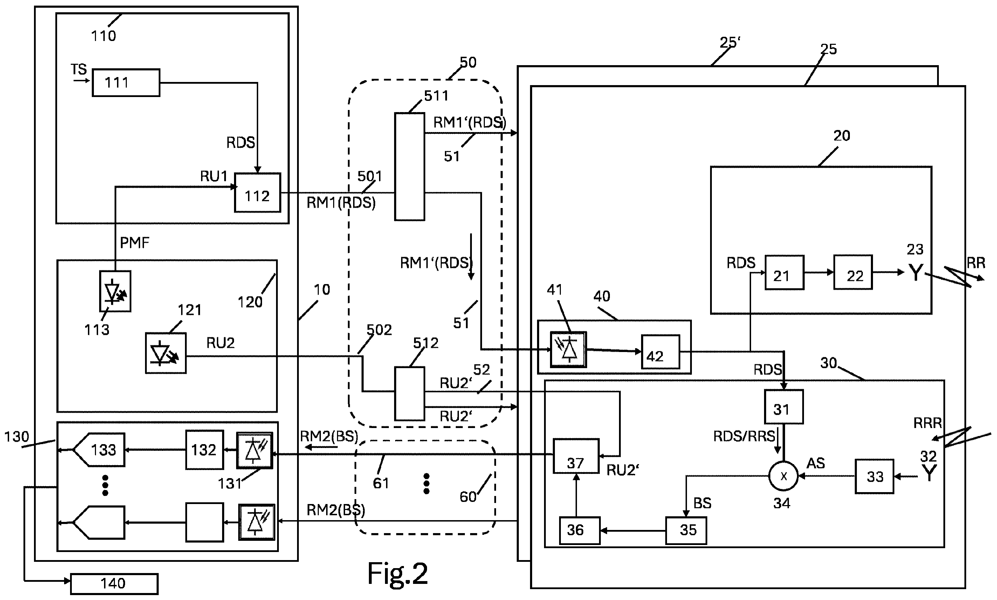

In the exemplary embodiment of Figure 1, the first radiation source 113, or in case of multiple sources, the first radiation sources 113, may be located in the central laser transmission module 110. Alternatively, the first radiation source 113, or in case of multiple sources, the first radiation sources 113, may be located in the central laser module 120 (as shown in Figure 2). If they are located in the central laser module 120, they are preferably each connected to their respective first modulator 112 through a polarization-maintaining fiber PMF.

Figure 2 depicts another exemplary embodiment of the radar system 1 according to the present invention. Here, the optical forward path 50 comprises a first common fiber 501 and a first optical splitter 511. The first radiation source 113 and the first modulator 112 provide the modulated optical radiation RM1, which carries the radar driver signal RDS. The modulated radiation RM1 is fed into the first common fiber 501 and then split into a plurality of subradiations RM1' by the first optical splitter 511. The subradiations RM1' are transmitted via the first fibers 51 of the optical forward path 50 to the optical receivers 40 of a plurality of optical receivers 40, and via the optical receivers 40 to the plurality of pairs of radar transmission units 20 and radar reception units 30.

The optical forward path 50 further comprises a second common fiber 502 and a second optical splitter 512. The second radiation source 121 of the central laser module 120 provides the unmodulated optical radiation RU2, which is fed into the second common fiber 502 and then split into a plurality of subradiations RU2' by the second optical splitter 512. The subradiations RU2' are transmitted via the second fibers 52 of the optical forward path 50 to the electro-optical modulators 37 of the plurality of radar reception units 30.

In the exemplary embodiment of Figure 2, the first radiation source 113 is located in the central laser module 120 and connected to the first modulator 112 via a polarization-maintaining fiber PMF. Alternatively, the first radiation source 113 may be located in the central laser transmission module 110 as illustrated in Figure 1.

Regarding the other features of the second embodiment, the explanations given above in connection with the embodiment shown in Figure 1 apply in a corresponding manner.

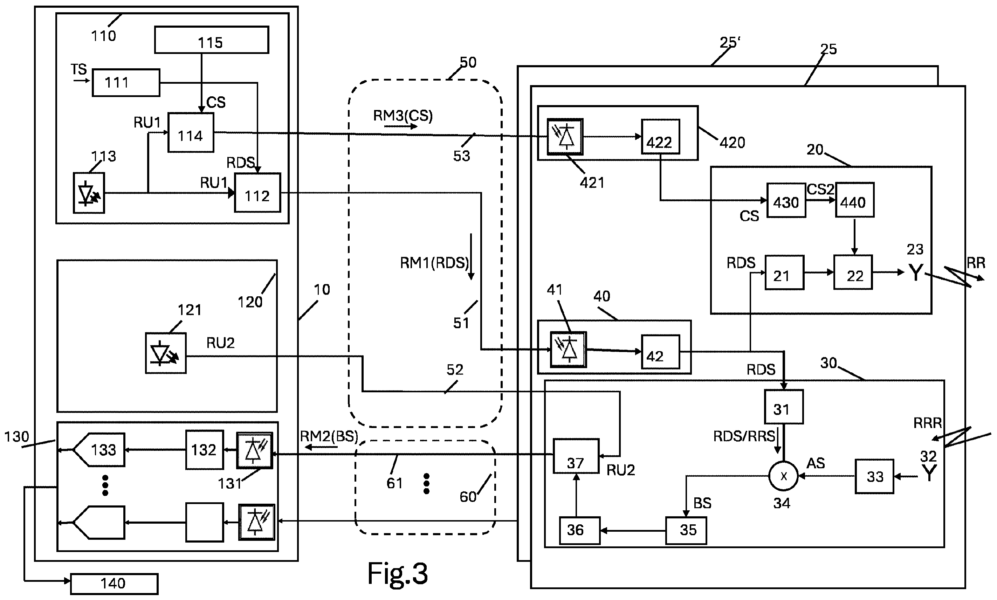

Figure 3 shows a third exemplary embodiment of the present invention. Here, the central laser transmission module 110 of the central unit 10 comprises a third modulator 114, which modulates the unmodulated radiation RU1 of the first radiation source 113 with an electrical control signal CS of a control subunit 115 of the central laser transmission module 110. The third modulator 114 provides modulated optical radiation RM3 carrying the control signal CS. The control subunit 115 and/or the third modulator 114 may be located in the central laser transmission module 110 of the central unit 10 and are preferably integrated in the same EPIC together with the other components of the central laser transmission module 110. Alternatively, the first radiation source 113, or in case of multiple sources, the first radiation sources 113, may be located in the central laser module 120 (as shown in Figure 2). If they are located in the central laser module 120, they are preferably each connected to their respective third modulator 114 through a polarization-maintaining fiber PMF.

The control signal CS may for instance enable or disable the generation of radar radiation (i.e. active radar operation) of the radar transmission unit 20 and/or control the output power of the radar transmission unit 20.

The third modulator 114 is connected to a third fiber 53 of the optical forward path 50, which optically transmits the control signal CS to a second optical receiver 420. The second optical receiver 420 comprises a photodetector 421 and an amplifier 422 and extracts the control signal CS from the received modulated radiation RM3. The second optical receiver 420 provides the control signal CS to an RSSI unit 430 (RSSI: Received Signal Strength Indicator), which evaluates the control signal CS and provides a secondary control signal CS2 indicating the signal strength to a control subunit 440. The control subunit 440 may control the operation of the radar transmission unit 20, for instance by controlling the amplification of the amplifier 22 of the radar transmission unit 20, on the basis of the secondary control signal CS2. The control subunit 440 may also control the operation of the radar reception unit 30.

In case of multiple pairs of radar transmission units 20 and radar reception units 30, the radar system 1 preferably comprises a first radiation source 113, a first modulator 112 and a third modulator 114 for each such pair.

Regarding the other features of the third embodiment, the explanations given above in connection with the embodiments shown in Figures 1-2 apply in a corresponding manner.

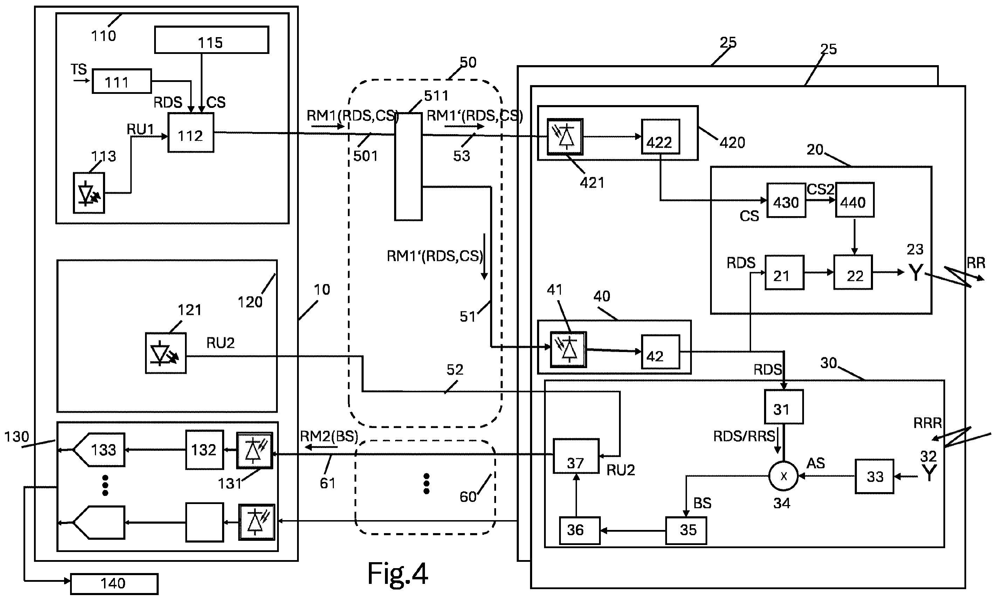

Figure 4 shows a fourth exemplary embodiment of the present invention. Here, the radar driver signal RDS of the frequency function generator 111 and the control signal CS of the control subunit 115 are both used to modulate the unmodulated radiation RU1 of the first radiation source 113. As a result, both the radar driver signal RDS and the control signal CS are transmitted via the modulated radiation RM1 and subradiations RM1' to the optical receiver 40 and the second optical receiver 420. More specifically, the radar driver signal RDS is transmitted via the first common fiber 501, the first optical splitter 511, the first fiber 51 and the optical receiver 40 to the transmission unit 20 and the radar reception unit 30, and the control signal CS is transmitted via the first common fiber 501, the first optical splitter 511, the third fiber 53 and the second optical receiver 420 to the RSSI unit 430.

The control signal CS may for instance enable or disable the generation of radar radiation (i.e. active radar operation) of the radar transmission unit 20 and/or control the output power of the radar transmission unit 20. The control signal CS and the radar driver signal RDS are preferably transmitted in different frequency ranges to avoid deterioration of the radar driver signal RDS. Preferably, the control signal is transmitted in passive segments CP and/or the idle time of the waveforms WV (see Figure 7).

In case of multiple pairs of radar transmission units 20 and radar reception units 30, the radar system 1 preferably comprises a first radiation source 113, a first modulator 112, a first common fiber 501, a first optical splitter 511, a first fiber 51, a third fiber 53, a second optical receiver 420, a RSSI unit 430 and a control subunit 440 for each such pair.

Specific coding may be used to address the control signal CS to specific radar transmission and reception modules 25.

Regarding the other features of the fourth embodiment, the explanations given above in connection with the embodiments shown in Figures 1-3 apply in a corresponding manner.

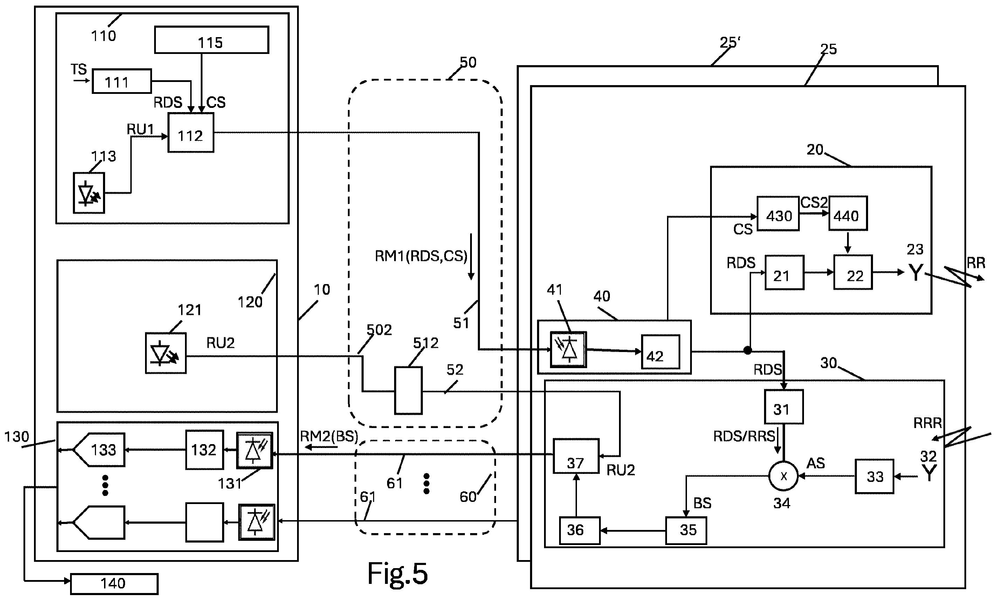

Figure 5 shows a fifth exemplary embodiment of the present invention. Here, the radar driver signal RDS of the frequency function generator 111 and the control signal CS of the control subunit 115 are both used to modulate the unmodulated radiation RU1 of the first radiation source 113. Both the radar driver signal RDS and the control signal CS are transmitted via the first fiber 51 to the optical receiver 40.

The optical receiver 40 extracts the radar driver signal RDS and provides it to the radar transmission unit 20 and the radar reception unit 30. The optical receiver 40 also extracts the control signal CS and provides it to the RSSI unit 430 and the control subunit 440.

Regarding the other features of the fifth embodiment, the explanations given above in connection with the embodiments shown in Figures 1-4 apply in a corresponding manner.

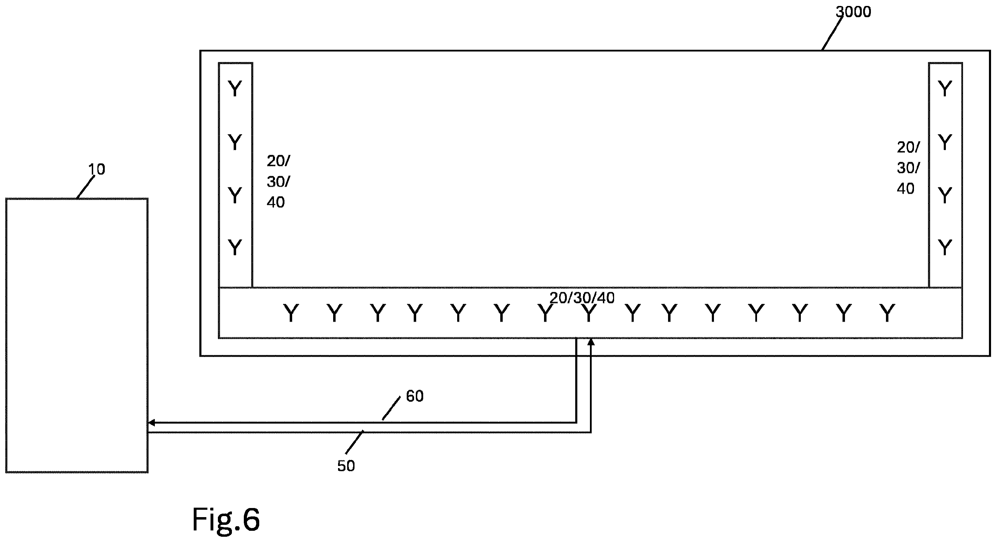

Figure 6 depicts a sixth exemplary embodiment of a radar system 1 according to the present invention. The system of Figure 6 comprises a plurality of radar reception units 30, configured to receive radar radiation. The radar reception units 30 are each connected to the central unit 10 via the optical forward path 50 and the optical backward path 60. The radar reception units 30 preferably operate simultaneously based on the same radar driver signal RDS and/or the same radar reference signal RRS. The radar reception units 30 may be arranged linearly, in a single plane, or randomly distributed in three-dimensional space.

The system of Figure 6 further comprises a plurality of radar transmission units 20, configured to emit radar radiation. The radar transmission units 20 are each connected to and controlled by the central unit 10 via the optical forward path 50. The radar transmission units 20 are preferably operated sequentially, one after another, in order to provide a single radar emission operation. Alternatively, multiple radar transmission units 20 operate at the same time. In this case, each radar transmission unit emit radar radiation, which is phase coded to distinguish between the different transmission units.

The radar transmission units 20 and the radar reception units 30 are optically and electrically arranged pairwise such that each pair can be provided with the radar driver signal RDS and the radar reference signal RRS, respectively, via the same assigned optical receiver 40.

The radar transmission units 20 and the radar reception units 30 may be arranged linearly, in a single plane, or randomly distributed in three-dimensional space. The radar transmission units 20 and the radar reception units 30 together forming an antenna array 3000.

A software in the central unit 10 may be used to change the antenna array 3000 configuration by enable or disable any of the radar transmission units 20 or radar reception units 30, for instance by using the control signal CS described in Figures 3-5. (Software-controlled antenna array).

Regarding the other features of the sixth embodiment, the explanations given above in connection with the embodiments shown in Figures 1-5 apply in a corresponding manner.

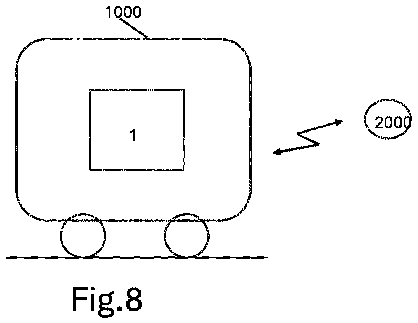

Figure 8 shows an exemplary embodiment of a vehicle 1000 comprising a radar system 1 as described above, for detecting objects 2000.

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

Furthermore, the terms "first", "second", "third", and so on are used to distinguish between items of the same kind. However, none of these terms imply a specific number of such items. These terms do not imply that all such entities items must be present. For example, the "first" and "fourth" items may be present even if the "second" and "third" are absent."

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure and, therefore, the applicant may file further patent claims regarding these additional embodiments at a later stage of the prosecution.

Further, the applicant would like to emphasize that each feature of each of the following dependent claims may be combined with any of the present independent claims as well as with any other (one or more) of the present dependent claims (regardless of the present claim structure). Therefore, the applicant may direct further patent claims towards other claim combinations at a later stage of the prosecution.

### Reference List

- 1: Radar system
- 10: Central unit
- 20: Radar transmission unit
- 21: Frequency multiplier (transmission path)
- 22: Amplifier (transmission path)
- 23: Radar transmission antenna
- 25: Radar transmission and reception module
- 25': Radar transmission and reception module
- 30: Radar reception unit
- 31: Frequency multiplier (reception path)
- 32: Radar reception antenna
- 33: Amplifier (reception path)
- 34: Mixer
- 35: Filter
- 36: Driver
- 37: Electro-optical modulator
- 40: Optical receiver
- 41: Photodetector (optical receiver)
- 42: Amplifier (optical receiver, preferably transimpedance)
- 50: Optical forward path
- 51: First fiber
- 52: Second fiber
- 53: Third fiber
- 60: Backward path
- 61: Fiber of backward path
- 110: Central laser transmission module
- 111: Frequency function generator
- 112: First modulator
- 113: First radiation source (laser)
- 114: Third modulator
- 115: Control subunit
- 120: Central laser module
- 121: Second radiation source (laser)
- 130: Central reception module
- 131: Photodetector (central reception module)
- 132: Amplifier (central reception module, preferably transimpedance)
- 133: Analog-digital converter
- 140: Evaluation system (e.g. computer system / central control unit)
- 420: Second optical receiver
- 421: Photodetector (second optical receiver)
- 422: Amplifier (second optical receiver)
- 430: RSSI unit (Received Signal Strength Indicator)
- 440: Control subunit
- 501: First common fiber
- 502: Second common fiber
- 511: First optical splitter
- 512: Second optical splitter
- 1000: Vehicle
- 2000: Object
- 3000: Antenna array

- A: Amplitude of trigger signal
- α: Slope of frequency ramp
- AS: Antenna signal
- BS: Baseband signal
- CA: Active segment of waveform
- CS: Control signal
- CS2: Secondary control signal
- f: Frequency of radar driver signal
- fc: Carrier frequency (start frequency of ramp)
- FR: Frame
- PMF: Polarization-maintening fiber
- RDS: Radar driver signal
- RM1: Modulated optical radiation (carries RDS)
- RM1': Subradiations of RM1
- RM2: Modulated optical radiation carrying BS
- RM3: Modulated optical radiation carrying CS
- RR: Radar radiation
- RRR: Returning radar radiation
- RRS: Radar reference signal
- RU1: Unmodulated radiation from first radiation source 113
- RU2: Unmodulated radiation from second radiation source 121
- RU2': Subradiations of RU2
- t: Time
- TS: Trigger signal
- WV: Waveform

## Claims

1. A radar system (1) comprising a central unit (10), a radar transmission unit (20), and a radar reception unit (30),
- wherein the central unit (10) is optically connected to the radar transmission unit (20) via an optical forward path (50) for transmitting a radar driver signal (RDS) to the radar transmission unit (20),
- wherein the radar transmission unit (20) generates radar radiation (RR) based on the radar driver signal (RDS),
- wherein the radar reception unit (30) processes received radar radiation (RRR) to generate a baseband signal (BS) based on a reference signal (RRS), and
- wherein the central unit (10) is optically connected to the radar reception unit (30) via an optical backward path (60) for optically receiving the radar baseband signal (BS) from the radar reception unit (30),
**characterized in that**
- the central unit (10) transmits the radar driver signal (RDS) as modulated optical radiation via a first optical fiber (51) of the optical forward path (50) to an optical receiver (40) electrically connected to the radar transmission unit (20) and the radar reception unit (30),
- the central unit (10) further transmits unmodulated optical radiation via a second optical fiber (52) of the optical forward path (50) to the radar reception unit (30),
- the radar reception unit (30) comprises a mixer (34) for mixing an electrical reception signal (AS) corresponding to the received radar radiation (RRR) with the reference signal (RRS), the reference signal (RRS) being the radar driver signal (RDS) or a signal derived therefrom, to generate the baseband signal (BS), and
- the radar reception unit (30) comprises a modulator (37) for modulating the received unmodulated optical radiation (RU2) with the baseband signal (BS) to generate optically modulated radiation (RM2) for transmission via the optical backward path (60) to the central unit (10).

2. The radar system (1) of claim 1,
- wherein the central unit (10) is configured to transmit a control signal (CS) for controlling the radar transmission unit (20) also via the first optical fiber (51) of the optical forward path (50), and
- wherein the optical receiver (40) extracts the control signal (CS) and provides it to a control subunit (440) of the radar transmission unit (20).

3. The radar system (1) of any of the preceding claims,
- wherein the optical forward path (50) comprises a third optical fiber (53), and
- wherein the central unit (10) is configured to transmit a control signal (CS) for controlling the radar transmission unit (20) via the third optical fiber (53) of the optical forward path (50) to a second optical receiver (40), and
- wherein the second optical receiver (420) extracts the control signal (CS) and provides it to a control subunit (440) of the radar transmission unit (20).

4. The radar system (1) of claim 3,
- wherein the input end of the first optical fiber (51) and the input end of the third optical fiber (53) are connected to a first common fiber (501) via a first splitter (511), and
- wherein the first common fiber (501) is connected to a first modulator (112) of the central unit (10) and transmits both the radar driver signal (RDS) and the control signal (CS) towards the first splitter (511).

5. The radar system (1) of any of the preceding claims,
- wherein the radar system (1) comprises a plurality of radar modules (25) each of which comprises an optical receiver (40), a radar transmission unit (20) and a radar reception unit (30),
- wherein the optical forward path (50) comprises a plurality of first optical fibers (51), each of which is connected to the optical receiver (40) of an assigned radar module (25) of said plurality of radar modules (25), and
- wherein the optical backward path (60) comprises a plurality of second fibers (52), each of which is connected to the modulator (37) of an assigned radar module of said plurality of radar modules (25).

6. The radar system (1) of claim 5,
- wherein the optical forward path (50) comprises a plurality of third optical fibers (53), each of which is connected to another optical receiver (420) of an assigned radar module of said plurality of radar modules (25).

7. The radar system (1) of any of the preceding claims,
- wherein, for each first optical fiber (51), the central unit (10) comprises an individual first laser (113) for generating first unmodulated radiation (RU1) and an individual first modulator (112) for modulating the first unmodulated optical radiation (RU1) with the radar driver signal (RDS), and
- wherein each first fiber (51) is individually connected to one of said first modulators (112).

8. The radar system (1) of any of the preceding claims 1 to 6,
- wherein the first optical fibers (51) are connected to a first common fiber (501) via a first optical splitter (511),
- wherein the central unit (10) comprises a first laser (113) for generating first unmodulated radiation (RU1) and a first modulator (112) for modulating the first unmodulated optical radiation with the radar driver signal (RDS), and
- wherein the first common fiber (501) is connected to the first modulator (112).

9. The radar system (1) of any of the preceding claims 7 to 8,
- wherein the first modulator (112) modulates the first unmodulated optical radiation (RU1) with the radar driver signal (RDS) and the control signal (CS).

10. The radar system (1) of any of the preceding claims,
- wherein, for each second fiber (52), the central unit (10) comprises an individual second laser (121) for generating second unmodulated radiation (RU2), and
- wherein each second fiber (52) is individually connected to one of said second lasers (121).

11. The radar system (1) of any of the preceding claims 1 to 9,
- wherein the second fibers (52) are connected to a second common fiber (502) via a second optical splitter (512),
- wherein the central unit (10) comprises a second laser (121) for generating second unmodulated radiation, and
- wherein the second common fiber (502) is connected to the second laser (121).

12. The radar system (1) of any of the preceding claims,
- wherein, for each third optical fiber (53), the central unit (10) comprises an individual third modulator (114) for modulating the first or a third unmodulated optical radiation with the control signal (CS), and
- wherein each third optical fiber (53) is individually connected to one of said third modulators (114).

13. The radar system (1) of any of the preceding claims,
- wherein the first and/or second common fiber and/or the first and/or second optical splitter are components of the forward path, and/or
- wherein the central unit (10) comprises a central transmission module (110), and/or
- wherein the central unit (10) comprises a central laser module (120), and/or
- wherein the central unit (10) comprises a central reception module (130), and/or
- wherein the first lasers (113) are located in the central transmission module and/or in the central laser module, and/or,
- wherein the first modulators (112) are located in the central transmission module, and/or
- wherein the third modulators (114) are located in the central transmission module, and/or
- wherein the central reception module comprises an optical receiver (131) that is connected to the radar reception unit (30) via the backward path, and/or
- wherein the central reception module comprises an amplifier (132) that is connected to the optical receiver (131) of the central reception module, and/or
- wherein the central reception module comprises an analog-digital converter (133) that is connected to the amplifier of the central reception module, and/or
- wherein at least two of the components of the central transmission module are integrated in a first EPIC, electro-photonic integrated circuit, and/or
- wherein at least two of the components of the central reception module are integrated in a second EPIC, electro-photonic integrated circuit, and/or
- wherein at least two of the components of the central transmission module and the components of the central reception module are integrated in the same EPIC, and/or
- wherein the central transmission module comprises a frequency generator (111), and/or
- wherein the radar system (1) comprises two or more pluralities of radar modules (25), wherein an individual forward path and an individual backward path is assigned to each of said pluralities of radar modules (25), and wherein each of said pluralities of forward and backward paths corresponds to any of the forward and backward paths defined in the preceding claims.

14. Method of operating a radar system (1), for instance the radar system (1) of any of the preceding claims, that comprises a central unit (10), a radar transmission unit (20) and a radar reception unit (30), wherein the central unit (10) is optically connected to the radar transmission unit (20) via an optical forward path (50) and connected to the radar reception unit (30) via an optical backward path (60), **characterized in that**
- a radar driver signal (RDS) is transmitted as modulated optical radiation via a first optical fiber (51) of the optical forward path (50) to an optical receiver (40) that is electrically connected to the radar transmission unit (20) and the radar reception unit (30),
- unmodulated optical radiation is transmitted via a second optical fiber (52) of the optical forward path (50) to the radar reception unit (30),
- an electrical reception signal (AS) corresponding to the received radar radiation (RR) is mixed with the reference signal (RRS), the reference signal (RRS) being the radar driver signal (RDS) or a signal derived therefrom, to generate a baseband signal (BS), and
- unmodulated optical radiation is modulated with the baseband signal (BS) to generate optically modulated radiation for transmission via the optical backward path (60) to the central unit (10).

15. Vehicle (1000),
**characterized in that**
the vehicle (1000) comprises a radar system (1) according to any of the preceding claims 1-13 and/or configured to operate according to claim 14.
